# EUROPÄISCHE PATENTANMELDUNG

(11) **EP 4 163 741 A1**
(43) Veröffentlichungstag der Anmeldung: **12.04.2023**
(21) Anmeldenummer: 21201044.1
(22) Anmeldetag: 05.10.2021
(51) Int. Cl.: G05B 19/042

(54) **KONTEXTUALISIERTE UND KOLLABORATIONSFÄHIGE ANZEIGENSICHERUNGEN EINES LEITSYSTEMS FÜR EINE TECHNISCHE ANLAGE**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Vorgeschlagen wird ein Leitsystem (14) für eine technische Anlage, insbesondere Prozess- oder Fertigungsanlage, das wenigstens einen Operator Station Server (15) und wenigstens einen Operator Station Client (16) aufweist, wobei der Operator Station Server (15) dazu ausgebildet ist, Visualisierungsinformationen zu erzeugen und zur Visualisierung an den Operator Station Client (16) zu übertragen, um ein Bedienen und Beobachten der technischen Anlage durch einen Operator zu ermöglichen, wobei die Visualisierungsinformationen wenigstens ein Anlagenbild (1) der technischen Anlage umfassen, und wobei das Anlagenbild (1) wenigstens ein Bildelement (7) umfasst, in welchem Daten der technischen Anlage visuell darstellbar sind. Das Leitsystem (14) ist dadurch gekennzeichnet, dass es dazu ausgebildet ist, in Reaktion auf eine von dem Operator empfangene Anweisung eine Dokumentationsinformation zu erzeugen und in einem Speicher (13) zu hinterlegen, insbesondere in einem Speicher (13) des Leitsystems (14) und/oder in einem cloudbasierten Speicher, wobei die Dokumentationsinformation das Anlagenbild (1) mit dem wenigstens einen Bildelement (7) und die Daten der technischen Anlage umfasst, die in dem Bildelement (7) darstellbar und dem Bildelement (7) zugeordnet sind.

## Beschreibung

Die Erfindung betrifft ein Leitsystem für eine technische Anlage, insbesondere Prozess- oder Fertigungsanlage, das wenigstens einen Operator Station Server und wenigstens einen Operator Station Client aufweist, wobei der Operator Station Server dazu ausgebildet ist, Visualisierungsinformationen zu erzeugen und zur Visualisierung an den Operator Station Client zu übertragen, um ein Bedienen und Beobachten der technischen Anlage durch einen Operator zu ermöglichen, wobei die Visualisierungsinformationen wenigstens ein Anlagenbild der technischen Anlage umfassen, und wobei das Anlagenbild wenigstens ein Bildelement umfasst, in welchem Daten der technischen Anlage visuell darstellbar sind. Außerdem betrifft die Erfindung ein Verfahren zum Erzeugen einer Dokumentationsinformation durch ein Leitsystem für eine technische Anlage, insbesondere Prozess- oder Fertigungsanlage.

In (Prozess-)Leitsystemen können Operatoren im Rahmen der Bedienung und Beobachtung so genannte Bildschirmabzüge (Screenshots) erstellen. Dies dient beispielsweise der Sicherung von Anomalien, der routinemäßigen Dokumentation, der Einweisung anderer Operatoren, um Analysen vornehmen oder Entscheidungen treffen zu können, oder um eine Vergleichsgrundlage für einen Vorher-Nachher Vergleich zu erhalten.

Es ist bekannt, dass der Operator die auf einem Bildschirm angezeigte Information, beispielsweise ein Anlagenbild, derart manuell präpariert, dass ein erkennbarer Bildschirmabzug erstellt werden kann. Dies kann sich als schwierig gestalten, wenn einzelne Objekte auf dem Bildschirm von anderen Objekten überdeckt sind. Um leserliche Bildschirmabzüge erhalten zu können, werden oftmals mit entsprechendem Vergrößerungsfaktor mehrere Bildschirmabzüge vorgenommen, um diese Verdeckungen zu vermeiden.

Aber auch dann können wesentliche Informationen fehlen, um den Bildschirmabzug für die beschriebenen Anwendungsfälle effizient nutzen zu können. So können beispielsweise im Bildschirmabzug Trendkurven nicht richtig zu erkennen oder durch Aggregationseffekte verfälscht sein. Oder Meldefolgeanzeigen können nicht alle relevanten Alarme darstellen, da die Zeichenfläche nicht ausreichend ist, usw. Auch eine Persistierung, also die fachgerechte Dokumentation, wie auch die Kollaboration (zwischen Operatoren auf Grundlage von Bildschirmabzügen) sind gemäß dem Stand der Technik nur mit teils erheblichen Einschränkungen möglich.

Bekannte Leitsysteme, die einem Operator Anlagenbilder mit verschiedenen Objekten mittels mehrere Operator Station Server darbieten, sind beispielsweise in der EP 3 637 205 A1 und der EP 3 736 647 A1 offenbart.

Der Erfindung liegt die Aufgabe zugrunde, ein Leitsystem für eine technische Anlage anzugeben, das eine verbesserte Bedienung und Beobachtung der technischen Anlage ermöglicht.

Diese Aufgabe wird gelöst durch ein Leitsystem für eine technische Anlage, insbesondere eine Fertigungs- oder Prozessanlage, mit den Merkmalen des Anspruchs 1. Zudem wird die Aufgabe gelöst durch ein Verfahren zum Erzeugen einer Dokumentationsinformation durch ein Leitsystem für eine technische Anlage, insbesondere Prozess- oder Fertigungsanlage mit den Merkmalen des Anspruchs 9. Vorteilhafte Weiterbildungen ergeben sich aus den abhängigen Ansprüchen.

Ein Leitsystem eingangs beschriebener Art ist erfindungsgemäß dadurch gekennzeichnet, dass das Leitsystem dazu ausgebildet ist, in Reaktion auf eine von dem Operator empfangene Anweisung eine Dokumentationsinformation zu erzeugen und in einem Speicher zu hinterlegen, insbesondere in einem Speicher des Leitsystems und/oder in einem cloudbasierten Speicher, wobei die Dokumentationsinformation das Anlagenbild mit dem wenigstens einen Bildelement und die Daten der technischen Anlage umfasst, die in dem Bildelement darstellbar sind.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem kann neben dem Operator Station Server und dem Operator Station Client weitere Komponenten, wie beispielsweise sogenannte prozess- oder fertigungsnahe Komponenten umfassen, die zur Ansteuerung von Aktoren bzw. Sensoren dienen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem "Operator Station Server" wird vorliegend ein Server verstanden, der zentral Daten eines Bedien- und Beobachtungssystems sowie in der Regel Alarm- und Messwertarchive des Leitsystems für die technische Anlage erfasst und Benutzern zur Verfügung stellt. Der Operator Station Server stellt in der Regel eine Kommunikationsverbindung zu Automatisierungssystemen (wie einem Automatisierungsgerät) der technischen Anlage her und gibt Daten der technischen Anlage an wenigstens den Operator Station Client weiter, der zur Bedienung und Beobachtung eines Betriebs der einzelnen Funktionselemente der technischen Anlage verwendet werden kann.

Der Operator Station Server kann selbst über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem Operator wird ein menschlicher Bediener der technischen Anlage verstanden. Der Operator interagiert mittels spezieller Benutzerschnittstellen mit der technischen Anlage bzw. dessen Leitsystem und steuert spezielle technische Funktionen der Anlage. Hierzu kann der Operator das Bedien- und Beobachtungssystem des Leitsystems mit den Operator Station Servern und den Operator Station Client nutzen.

Bei den Daten der technischen Anlage kann es sich, im Fall einer Prozessanlage, um Prozessdaten wie Druckwerte, Temperaturwerte oder Füllstandswerte, aber beispielsweise auch um Meldungen handeln. Die Daten können Rohdaten von Sensoren darstellen. Sie können aber auch durch einen Messumformer, ein Peripheriegerät, ein Automatisierungsgerät oder ein sonstiges, hierfür ausgebildetes Gerät verarbeitet worden sein.

Der Operator kann das Anlagenbild oder die Anlagenbilder, die ihm auf dem Operator Station Client visuell dargeboten werden, für die Bedienung und Beobachtung der technischen Anlage verwenden. In dem Anlagenbild kann beispielsweise ein verfahrenstechnischer Prozess schematisch visualisiert und durch Blocksymbole der einzelnen Prozessobjekte, mit denen der verfahrenstechnische Prozess automatisiert wird, dynamisiert werden. Eine Bedienung des verfahrenstechnischen Prozesses kann dabei unter anderem durch sogenannte Faceplates möglich sein, die z.B. über die dynamisierten Blocksymbole geöffnet werden können.

Das erfindungsgemäße Leitsystem ist in vorteilhafter Weise dazu ausgebildet, auf eine Anweisung / einen Trigger des Operators hin eine Dokumentationsinformation zu erzeugen und in einem Speicher abrufbar zu hinterlegen. Diese Dokumentationsinformation spiegelt einen aktuellen Zustand der Bedienung und Beobachtung der technischen Anlage wider. Sie umfasst neben dem Anlagenbild, das eine Vielzahl von visualisierten Objekten (z.B. Prozessobjekten) umfassen kann, auch die Daten, die in dem wenigsten einen Bildelement des Anlagenbildes darstellbar und dem Bildelement zugeordnet sind.

Ein Beispiel für ein solches Bildelement hierfür ist eine Anzeige bzw. ein Diagramm in dem Anlagenbild, die eine zeitliche Entwicklung eines Messwertes einer Messstelle der technischen Anlage wiedergibt. Das erfindungsgemäße Leitsystem kann nicht nur einen "herkömmlichen" Bildschirmabzug des aktuell angezeigten Anlagenbildes mit den aktuell in der Anzeige angezeigten Messwerten erstellen, sondern das Leitsystem ruft die in der Anzeige darstellbaren und der Anzeige zugeordneten Messwerte ab und ordnet diese der Dokumentationsinformation zu, die es in dem Speicher hinterlegt. Der Operator erhält dadurch neben dem rein "grafischen" Anteil des Bildschirmabzugs auch nicht oder nur teilweise im Anlagenbild dargestellten Kontext in Form von beispielsweise Roh-Messwerten, was eine umfassendere Analyse ermöglicht.

In Diagrammen dargestellte Messwertkurven können in herkömmlichen Bildschirmabzügen von Anlagenbildern kaum oder nur teilweise lesbar sein. Das erfindungsgemäße Leitsystem exportiert die Daten (z.B. Messwerte) in den Speicher und verknüpft diese mit der Dokumentation des Anlagenbildes in der Dokumentationsinformation. Die Dokumentationsinformation kann darüber hinaus beispielsweise auch für ein Audit verwendet werden, da sie detaillierte Rückschlüsse ermöglichen, welche Informationen dem Operator zu welchem Zeitpunkt vorlagen.

Es kann vorkommen, dass die in dem Bildelement darzustellenden Messwerte eine zeitliche Aggregation aufweisen. In diesem Fall kann die von dem Leitsystem in dem Speicher zu hinterlegende Dokumentationsinformation die Messwerte der technischen Anlage, die in dem Bildelement darzustellen sind, in einem Zustand der zeitlichen Aggregation, und vorzugsweise in einem unverarbeiteten Rohzustand, umfassen. Der Operator kann dadurch eine qualifizierte und umfassende Analyse der hinterlegten Daten im Kontext des gespeicherten Anlagenbildes vornehmen.

Bevorzugt handelt es sich bei dem Bildelement um eine Meldeanzeige zur Darstellung von Meldungen der technischen Anlage. Beispielsweise kann die Meldeanzeige eine Menge an Alarmmeldungen umfassen, die in dem Leitsystem aufgekommen sind. Besonders bevorzugt umfasst die von dem Leitsystem in dem Speicher zu hinterlegende Dokumentationsinformation nicht nur die zum Zeitpunkt der Auslösung der Anweisung durch den Operator in der Meldeanzeige dargestellten Meldungen, sondern im Wesentlichen alle Meldungen, die in der technischen Anlage aufgekommen sind. Dadurch kann sichergestellt werden, dass nicht nur eine Teilmenge von Meldungen in der Dokumentationsinformation enthalten sind, sondern vielmehr alle in der technischen Anlage aufgekommenen Meldungen.

Der Operator kann vorteilhafterweise vorgeben, nach welchen Kriterien die Meldungen in die in dem Speicher zu hinterlegende Dokumentationsinformation aufzunehmen sind, wobei ein Kriterium insbesondere eine Aktualität, eine Kritikalität oder ein Typ einer Meldung darstellen kann. Hierdurch kann der Operator gezielt nach verschiedenen Gesichtspunkten die Dokumentationsinformation erstellen, um je nach Kontext eine optimal angepasste Dokumentation erzeugen zu können.

Das Leitsystem ist im Rahmen einer vorteilhaften Weiterbildung der Erfindung dazu ausgebildet, die in dem Speicher hinterlegte Dokumentationsinformation von weiteren, von dem Operator verschiedenen Operatoren der technischen Anlage auslesbar und visuell darstellbar zu gestalten. Dies ermöglicht beispielsweise für den Fall, dass ein Operator A die Dokumentationsinformation erstellen lässt und einen Operator B um Unterstützung bei der Analyse bittet, eine bestmögliche Kooperation der beiden Operatoren.

Besonders bevorzugt umfasst die in dem Speicher hinterlegte Dokumentationsinformation eine Kennung des Operators, eine Erstellungszeit, eine Kennung des Anlagenbildes, eine Kommentierung des Operators und/oder eine Klassifizierung der Dokumentationsinformation.

Die zuvor formulierte Aufgabe wird zudem gelöst durch ein Verfahren zum Erzeugen einer Dokumentationsinformation durch ein Leitsystem für eine technische Anlage, insbesondere Prozess- oder Fertigungsanlage, das wenigstens einen Operator Station Server und wenigstens einen Operator Station Client aufweist, wobei der Operator Station Server dazu ausgebildet ist, Visualisierungsinformationen zu erzeugen und zur Visualisierung an den Operator Station Client zu übertragen, um ein Bedienen und Beobachten der technischen Anlage durch einen Operator zu ermöglichen, wobei die Visualisierungsinformationen wenigstens ein Anlagenbild der technischen Anlage umfassen, und wobei das Anlagenbild wenigstens ein Bildelement umfasst, in welchem Daten der technischen Anlage visuell darstellbar sind.

Das Verfahren umfasst die folgenden Verfahrensschritte:
a) In Reaktion auf eine von dem Operator empfangene Anweisung Erzeugen einer Dokumentationsinformation in einem Speicher, insbesondere des Leitsystems, wobei die Dokumentationsinformation das Anlagenbild mit dem wenigstens einen Bildelement und die Daten der technischen Anlage umfasst, die in dem Bildelement darstellbar und dem Bildelement zugeordnet sind,
b) Hinterlegen der Dokumentationsinformation in einem Speicher, insbesondere in Speicher des Leitsystems und/oder in einem cloudbasierten Speicher.

Bevorzugt handelt es sich bei dem Bildelement um ein Diagramm zur zeitlichen Darstellung von Messwerten der technischen Anlage. Die in dem Bildelement darzustellenden Messwerte können eine zeitliche Aggregation aufweisen, wobei die von dem Leitsystem in dem Speicher zu hinterlegende Dokumentationsinformation die Messwerte der technischen Anlage, die in dem Bildelement darzustellen sind, in einem Zustand der zeitlichen Aggregation, und vorzugsweise in einem unverarbeiteten Rohzustand, umfasst.

Bei dem Bildelement kann es sich auch um eine Meldeanzeige zur Darstellung von Meldungen der technischen Anlage handeln. Die von dem Leitsystem in dem Speicher zu hinterlegende Dokumentationsinformation kann dabei nicht nur die zum Zeitpunkt der Auslösung der Anweisung durch den Operator in der Meldeanzeige dargestellten Meldungen umfassen, sondern um im Wesentlichen alle Meldungen, die in der technischen Anlage aufgekommen sind.

Dabei kann der Operator vorgeben, nach welchen Kriterien die Meldungen in die in dem Speicher zu hinterlegende Dokumentationsinformation aufzunehmen sind, wobei ein Kriterium insbesondere eine Aktualität, eine Kritikalität oder ein Typ einer Meldung darstellt.

Die in dem Speicher hinterlegte Dokumentationsinformation kann bevorzugt von dem Operator und von weiteren, von dem Operator verschiedenen Operatoren der technischen Anlage aus dem Speicher ausgelesen und visuell dargestellt werden.

Die zuvor erläuterte Aufgabe wird zudem durch die Verwendung eines Leitsystems zum Betrieb einer technischen Anlage, insbesondere Fertigungs- oder Prozessanlage, gelöst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Es zeigen:
- FIG 1: ein Anlagenbild mit einer daraus erzeugten Dokumentationsinformation; und
- FIG 2: ein erfindungsgemäßes Leitsystem in einer Prinzipskizze.

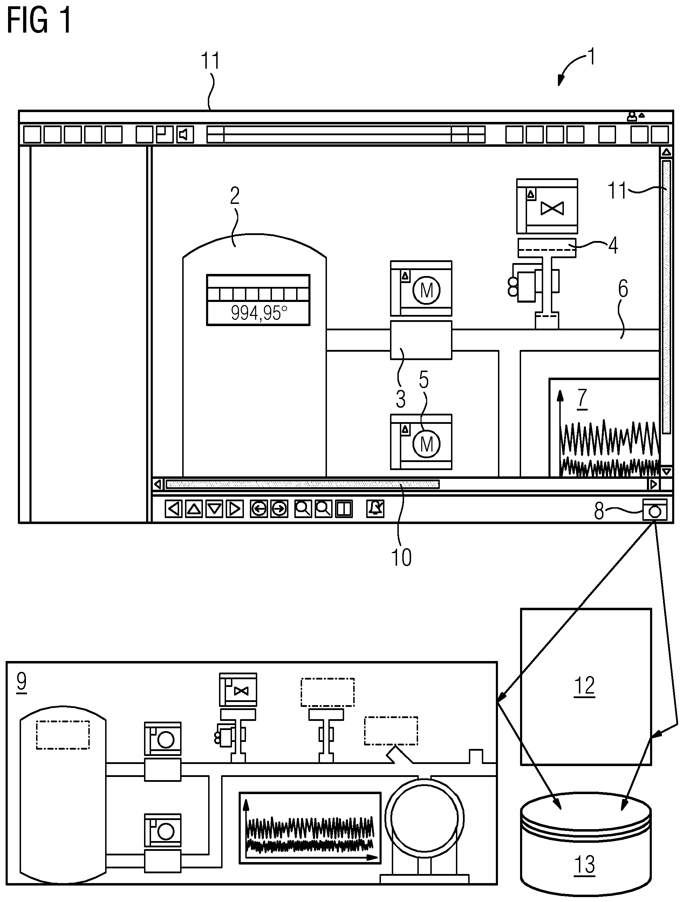

Im oberen Teil von FIG 1 ist ein Anlagenbild 1 einer als verfahrenstechnischen Anlage ausgebildeten technischen Anlage dargestellt. Das Anlagenbild 1 umfasst verschiedene Bildobjekte 2, 3, 4, 5, die jeweils eine Prozesskomponente der verfahrenstechnischen Anlage visualisieren. Zu erkennen sind Rohrleitungen 6, die die einzelnen Prozesskomponenten miteinander verbinden. Im rechten, unteren Bereich des Anlagenbildes 1 ist ein Diagramm 7 zur zeitlichen Darstellung von Messwerten der verfahrenstechnischen Anlage dargestellt. Darunter befindet sich ein Kamerasymbol 8.

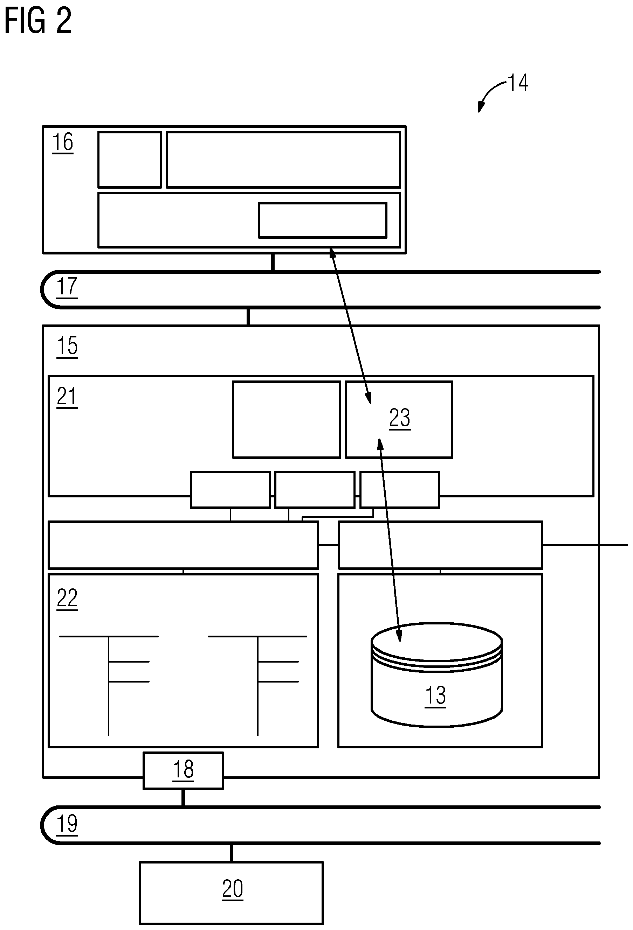

Das Anlagenbild 1 wird von einem Leitsystem (vgl. FIG 2) bereitgestellt und mittels eines Operator Station Client visualisiert. Es dient der Bedienung und Beobachtung der verfahrenstechnischen Anlage durch einen hierfür spezialisierten Operator. Der Operator kann dem Anlagenbild 1 in an sich bekannter Weise aktuelle Messwerte, Zustände, Bildaufnahmen, Fluiddynamiken und dergleichen entnehmen.

Durch eine Anwahl des Kamerasymbols 8 stellt der Operator eine Anweisung an das Leitsystem, eine besonders vorteilhafte Dokumentationsinformation zu erzeugen. Diese Dokumentationsinformation umfasst zum einen das gesamte, vollständige Anlagenbild 9, was in FIG 1 im unteren, linken Teil dargestellt ist. Im Vergleich dazu stellt das im oberen Teil von FIG 1 dargestellte Anlagenbild 1 nur ein Teilbild des vollständigen Anlagenbildes 9 dar, was daran zu erkennen ist, dass sich an der unteren und rechten Seite des Anlagenbildes 1 Leisten 10, 11 zum Verschieben des dargestellten Teilbildes befinden (Scrollbars). Der Operator erhält dadurch einen umfassenden Überblick über das vollständige Anlagenbild 9.

Neben dem vollständigen Anlagenbild 9 umfasst die Dokumentationsinformation auch Daten der verfahrenstechnischen Anlage, die in dem Diagramm 7 darstellbar und dem Diagramm 7 zugeordnet sind. Dabei handelt es sich bei den Daten um Messwerte eines oder mehrerer Sensoren der verfahrenstechnischen Anlage. Diese Daten werden zeitlich aggregiert in dem Diagramm 7 dargestellt, um dem Operator einen schnellen Überblick über den zeitlichen Verlauf der Messwerte zu ermöglichen. Das Leitsystem hinterlegt die Messwerte in ihrer unverarbeiteten Rohform und in einem Zustand der zeitlichen Aggregation in der Dokumentationsinformation. Nach der Erzeugung der Dokumentationsinformation wird diese vom Leitsystem in einem Speicher 13 abrufbar hinterlegt. Die Dokumentationsinformation wird derart in dem Speicher hinterlegt, dass sie von weiteren, von dem Operator verschiedenen Operatoren der verfahrenstechnischen Anlage aus dem Speicher 13 ausgelesen und den Operatoren visuell dargestellt werden kann.

In FIG 2 ist ein Teil eines erfindungsgemäßen Leitsystems 14 einer als Prozessanlage, d.h. als verfahrenstechnische Anlage, ausgebildeten technischen Anlage dargestellt. Das Leitsystem 14 umfasst einen Operator Station Server 15 und einen Operator Station Client 16.

Der Operator Station Server 15 und der Operator Station Client 16 sind über einen Terminalbus 17 miteinander und optional mit nicht dargestellten weiteren Komponenten des Leitsystems 14 wie einem Engineering Station Server verbunden.

Ein Benutzer bzw. Operator kann zum Zwecke des Bedienens und Beobachtens über den Operator Station Client 16 mittels des Terminalbus 17 auf den Operator Station Server 15 zugreifen. Der Terminalbus 17 kann, ohne sich darauf zu beschränken, beispielsweise als Industrial Ethernet ausgebildet sein.

Der Operator Station Server 15 weist eine Geräteschnittstelle 18 auf, die mit einem Anlagenbus 19 verbunden ist. Über diese Geräteschnittstelle 18 kann der Operator Station Server 15 mit einem Automatisierungsgerät 20 sowie mit optional vorhandenen weiteren Komponenten der Prozessanlage wie Peripheriegeräten (nicht dargestellt) kommunizieren. Der Anlagenbus 19 kann, ohne sich darauf zu beschränken, beispielsweise als Industrial Ethernet ausgebildet sein. Das Automatisierungsgerät 20 kann mit einer beliebigen Anzahl an Subsystemen (nicht dargestellt) verbunden sein.

Auf dem Operator Station Server 15 sind (unter anderem) ein Visualisierungsdienst 21, ein Prozessabbild 22 und der Speicher 13 implementiert. Der Operator Station Client 14 ist dazu ausgebildet, Anlagenbild zum Bedienen und Beobachten der Prozessanlage darzustellen, worauf hier aber nicht weiter eingegangen wird.

Das Automatisierungsgerät 20 ist dazu ausgebildet, eine Automatisierung der Prozessanlage zu steuern und zu überwachen. Hierzu ist auf dem Automatisierungsgerät 20 ein Steuerprogramm implementiert, welches im Rahmen einer Projektierung der Automatisierung der Prozessanlage auf das Automatisierungsgerät 20 geladen worden ist. Das Automatisierungsgerät 20 empfängt Prozessdaten (z.B. Messwerte) aus der Prozessanlage und überträgt diese an das Prozessabbild 22 des Operator Station Servers 15.

Ein spezialisierter Anzeigendienst 23 des Visualisierungsdienstes 21 des Operator Station Servers 15 erzeugt das Anlagenbild 1 (vgl. FIG 1), das zur Visualisierung an den Operator Station Client 16 übertragen wird. In dem Anlagenbild 1 ist, wie bereit beschrieben, ein Bildelement 7 mit einem Diagramm eines zeitlichen Verlaufs von Messwerten der Prozessanlage enthalten. Wenn der Operator eine Anweisung erteilt (z.B. durch Betätigen des Kamerasymbols 8), wird eine Dokumentationsinformation wie zuvor erläutert erzeugt und in dem Speicher 13 hinterlegt. Dabei wird die Dokumentationsinformation derart in dem Speicher 13 hinterlegt, dass sie persistiert und über eine Verteilung allen (weiteren) Operator Station Clients verfügbar gemacht werden kann, die mit dem Leitsystem 14 verbunden sind. Die Dokumentationsinformation wird mit dem folgenden Kontext in dem Speicher 13 hinterlegt:
- Datum bzw. Uhrzeit
- Kennung bzw. Name des Operators
- Name bzw. Kennung des Anlagenbildes, von dem der Bildschirmabzug stammt
- Kommentare des Operators (z.B. "Anomalie Tanklevel beim Öffnen von Pumpe 2 - Rauschüberlagerung des Sensorwertes. Zu Prüfen")
- Ein Status der Dokumentationsinformation (z.B. "aktiv / zu erledigen", "erledigt")
   - Eine Sichtbarkeitsklasse wie "Private" oder "Public".

Zusammenfassend ermöglicht es das Leitsystem 1, kontextualisierte, verdeckungsfreie und kollaborationsfähige Dokumentationsinformationen für eine verbesserte Bedienung und Beobachtung der technischen Anlage erzeugen zu lassen.. Die Dokumentationsinformation wird automatisch derart auf dem Operator Station Server 15 (alternativ oder zusätzlich: in einer cloudbasierten Umgebung) persistiert, dass sie für eine kollaborierende Analyse unter verschiedenen Operatoren zur Verfügung steht.

Durch die Erfindung kann daher ein wesentlicher Beitrag für eine verbesserte Bedienbarkeit des Leitsystems einer technischen Anlage geleistet werden.

## Patentansprüche

1. Leitsystem (14) für eine technische Anlage, insbesondere Prozess- oder Fertigungsanlage, das wenigstens einen Operator Station Server (15) und wenigstens einen Operator Station Client (16) aufweist, wobei der Operator Station Server (15) dazu ausgebildet ist, Visualisierungsinformationen zu erzeugen und zur Visualisierung an den Operator Station Client (16) zu übertragen, um ein Bedienen und Beobachten der technischen Anlage durch einen Operator zu ermöglichen, wobei die Visualisierungsinformationen wenigstens ein Anlagenbild (1) der technischen Anlage umfassen, und wobei das Anlagenbild (1) wenigstens ein Bildelement (7) umfasst, in welchem Daten der technischen Anlage visuell darstellbar sind,
**dadurch gekennzeichnet, dass**
das Leitsystem (14) dazu ausgebildet ist, in Reaktion auf eine von dem Operator empfangene Anweisung eine Dokumentationsinformation zu erzeugen und in einem Speicher (13) zu hinterlegen, insbesondere in einem Speicher (13) des Leitsystems (14) und/oder in einem cloudbasierten Speicher,
wobei die Dokumentationsinformation das Anlagenbild (1) mit dem wenigstens einen Bildelement (7) und die Daten der technischen Anlage umfasst, die in dem Bildelement (7) darstellbar und dem Bildelement (7) zugeordnet sind.

2. Leitsystem (14) nach Anspruch 1, bei dem es sich bei dem Bildelement (7) um ein Diagramm zur zeitlichen Darstellung von Messwerten der technischen Anlage handelt.

3. Leitsystem (14) nach Anspruch 1 und 2, bei dem die in dem Bildelement (7) darzustellenden Messwerte eine zeitliche Aggregation aufweisen, wobei die von dem Leitsystem (14) in dem Speicher (13) zu hinterlegende Dokumentationsinformation die Messwerte der technischen Anlage, die in dem Bildelement (7) darzustellen sind, in einem Zustand der zeitlichen Aggregation, und vorzugsweise in einem unverarbeiteten Rohzustand, umfasst.

4. Leitsystem (14) nach Anspruch 1, bei dem es sich bei dem Bildelement (7) um eine Meldeanzeige zur Darstellung von Meldungen der technischen Anlage handelt.

5. Leitsystem (14) nach Anspruch 4, bei dem die von dem Leitsystem (14) in dem Speicher (13) zu hinterlegende Dokumentationsinformation nicht nur die zum Zeitpunkt der Auslösung der Anweisung durch den Operator in der Meldeanzeige dargestellten Meldungen umfasst, sondern um im Wesentlichen alle Meldungen, die in der technischen Anlage aufgekommen sind.

6. Leitsystem (14) nach Anspruch 5, bei dem durch den Operator vorgebbar ist, nach welchen Kriterien die Meldungen in die in dem Speicher (13) zu hinterlegende Dokumentationsinformation aufzunehmen sind, wobei ein Kriterium insbesondere eine Aktualität, eine Kritikalität oder ein Typ einer Meldung darstellt.

7. Leitsystem (14) nach einem der vorangegangenen Ansprüche, bei dem die in dem Speicher (13) hinterlegte Dokumentationsinformation von weiteren, von dem Operator verschiedenen Operatoren der technischen Anlage aus dem Speicher ausgelesen und visuell dargestellt werden kann.

8. Leitsystem (14) nach einem der vorangegangenen Ansprüche, bei dem die in dem Speicher (13) hinterlegte Dokumentationsinformation eine Kennung des Operators, eine Erstellungszeit, eine Kennung des Anlagenbildes, eine Kommentierung des Operators und/oder eine Klassifizierung der Dokumentationsinformation umfasst.

9. Verfahren zum Erzeugen einer Dokumentationsinformation durch ein Leitsystem (14) für eine technische Anlage, insbesondere Prozess- oder Fertigungsanlage, das wenigstens einen Operator Station Server (15) und wenigstens einen Operator Station Client (16) aufweist, wobei der Operator Station Server (15) dazu ausgebildet ist, Visualisierungsinformationen zu erzeugen und zur Visualisierung an den Operator Station Client (16) zu übertragen, um ein Bedienen und Beobachten der technischen Anlage durch einen Operator zu ermöglichen, wobei die Visualisierungsinformationen wenigstens ein Anlagenbild (1) der technischen Anlage umfassen, und wobei das Anlagenbild (1) wenigstens ein Bildelement (7) umfasst, in welchem Daten der technischen Anlage visuell darstellbar sind, das Verfahren umfassend:
a) In Reaktion auf eine von dem Operator empfangene Anweisung Erzeugen einer Dokumentationsinformation, wobei die Dokumentationsinformation das Anlagenbild (1) mit dem wenigstens einen Bildelement (7) und die Daten der technischen Anlage umfasst, die in dem Bildelement (7) darstellbar und dem Bildelement zugeordnet sind,
b) Hinterlegen der Dokumentationsinformation in einem Speicher (13), insbesondere in einem Speicher (13) des Leitsystems (14) und/oder in einem cloudbasierten Speicher.

10. Verfahren nach Anspruch 9, bei dem es sich bei dem Bildelement (7) um ein Diagramm zur zeitlichen Darstellung von Messwerten der technischen Anlage handelt.

11. Verfahren nach Anspruch 10, bei dem die in dem Bildelement (7) darzustellenden Messwerte eine zeitliche Aggregation aufweisen, wobei die von dem Leitsystem (14) in dem Speicher (13) zu hinterlegende Dokumentationsinformation die Messwerte der technischen Anlage, die in dem Bildelement (7) darzustellen sind, in einem Zustand der zeitlichen Aggregation, und vorzugsweise in einem unverarbeiteten Rohzustand, umfasst.

12. Verfahren nach Anspruch 9, bei dem es sich bei dem Bildelement (7) um eine Meldeanzeige zur Darstellung von Meldungen der technischen Anlage handelt.

13. Verfahren nach Anspruch 12, bei dem die von dem Leitsystem in dem Speicher (13) zu hinterlegende Dokumentationsinformation nicht nur die zum Zeitpunkt der Auslösung der Anweisung durch den Operator in der Meldeanzeige dargestellten Meldungen umfasst, sondern um im Wesentlichen alle Meldungen, die in der technischen Anlage aufgekommen sind.

14. Verfahren nach einem der Ansprüche 9 bis 13, bei dem durch den Operator vorgegeben wird, nach welchen Kriterien die Meldungen in die in dem Speicher (13) zu hinterlegende Dokumentationsinformation aufzunehmen sind, wobei ein Kriterium insbesondere eine Aktualität, eine Kritikalität oder ein Typ einer Meldung darstellt.

15. Verfahren nach einem der Ansprüche 9 bis 14, bei dem die in dem Speicher (13) hinterlegte Dokumentationsinformation von dem Operator und von weiteren, von dem Operator verschiedenen Operatoren der technischen Anlage aus dem Speicher (13) ausgelesen und visuell dargestellt werden.
